# EUROPEAN PATENT APPLICATION

(11) **EP 4 800 829 A1**
(43) Date of publication of application: **02.09.2026**
(21) Application number: 24884331.0
(22) Date of filing: 27.09.2024
(51) Int. Cl.: H01M 50/503, H01M 50/296, H01M 50/298, F16K 1/00

(54) **CONNECTOR, BATTERY, AND ELECTRIC DEVICE**

(30) Priority: 31.10.2023 CN 202322933075 U
(71) Applicant: Contemporary Amperex Technology Co., Limited, Ningde, Fujian 352100 (CN)
(72) Inventor: LI, Yan, Ningde, Fujian 352100 (CN); LV, Juanxia, Ningde, Fujian 352100 (CN); HE, Jia, Ningde, Fujian 352100 (CN); LI, Jia, Ningde, Fujian 352100 (CN); LIU, Yongfeng, Ningde, Fujian 352100 (CN)
(74) Representative: Ziebig Hengelhaupt Intellectual Property Attorneys Patentanwaltskanzlei PartGmbB
(86) International application number: PCT/CN2024/121784
(87) International publication number: WO 2025/092326

(57) **Abstract**

A connector, a battery, and an electric device. The connector (10, 20) comprises a base (11, 21) and first terminals (16, 25). The base (11, 21) has an insertion side (101, 201) and a fixing side (102, 202) arranged opposite to the insertion side (101, 201); a flow channel (110, 210) for conveying a fluid is formed on the base (11, 21), and two ports of the flow channel (110, 210) are respectively located on the insertion side (101, 201) and the fixing side (102, 202). The first terminals (16, 25) are configured to be electrically connected to a power supply; the first terminals (16, 25) are connected to the base (11, 21); and the first terminals (16, 25) extend to the insertion side (101, 201).

## Description

The present application claims priority to Chinese Patent Application No. 202322933075.2 filed with the China National Intellectual Property Administration on October 31, 2023 and entitled "CONNECTOR, BATTERY, AND ELECTRICAL APPARATUS", which is incorporated herein by reference in its entirety.

### TECHNICAL FIELD

The present application relates to the technical field of batteries, and in particular, to a connector, a battery, and an electrical apparatus.

### BACKGROUND

The statement here merely provides background information related to the present application, and does not necessarily constitute the prior art. In related arts, a battery includes a box body and a plurality of battery cells mounted inside the box body. In charging and discharging processes, the battery cells release a large amount of heat, which can easily cause the battery to overheat and catch fire. Heat exchange plates are typically used to cool the battery cells. However, the low temperature of the heat exchange plates can easily cause water vapor condensation inside the box body, which may corrode circuits or cause short circuits, thereby affecting battery safety. To prevent fire or condensed moisture, pipeline connectors are mounted on the box body, and the box body is connected to a gas source or the like through the pipeline connectors, to deliver a dry gas or a fire extinguishing agent into the box body. This increases the complexity of the box body, resulting in an excessive number of connectors on the box body, cumbersome connections, and inconvenient operation.

### SUMMARY OF THE INVENTION

The purpose of embodiments of the present application is to provide a connector to solve the technical problem of an excessive number of box body connectors of a battery in the prior art.

In a first aspect, the present application provides a connector, including:
a base having a plug-in side and a fixed side arranged opposite to the plug-in side; and
a first terminal, the first terminal being connected to the base and the first terminal being located on the plug-in side and configured to be electrically connected to a power source,
where the base is further provided with a flow passage for conveying a fluid, with two ports of the flow passage located on the plug-in side and the fixed side, respectively.

The base can be plugged into an external plug-in module, and the first terminal can be electrically connected to a power source to conduct the circuit. The flow passage can be in communication with the interior of the box body, thereby facilitating delivery of the fluid such as a dry gas or a fire extinguishing agent. When the dry gas is delivered into the box body, moisture can be blown out from the interior of the box body, thereby drying the interior of the box body and preventing water vapor accumulation in the box body, thus improving the battery safety. When the fire extinguishing agent is delivered into the box body, it can prevent internal battery combustion and provide rapid fire suppression. When the connector is connected, connections of both a circuit and a pipeline can be achieved simultaneously, thereby reducing the number of connectors, helping simplify the box body structure and connection process, and facilitating operation.

In one embodiment, the connector further includes a valve plug configured to control opening and closing of the flow passage, the valve plug being mounted within the flow passage.

By employing the above-mentioned technical means, the opening and closing of the flow passage in the connector can be controlled to block the flow passage when air supply is not required.

In one embodiment, the flow passage includes a sliding hole section and a position-limiting hole section that are in communication with each other. The position-limiting hole section is located at an end of the sliding hole section away from the fixed side. A cross-sectional area of the position-limiting hole section is smaller than that of the sliding hole section. One end of the valve plug is plugged into the position-limiting hole section to block the position-limiting hole section, and the other end of the valve plug is in sliding fit with an inner wall of the sliding hole section.

By employing the above-mentioned technical means, the fluid can be cut off when the valve plug slides to the position-limiting hole section, thereby closing the flow passage and preventing the valve plug from sliding out from the end of the flow passage near the plug-in side.

In one embodiment, the valve plug includes a sliding section and a plug head section, where the sliding section is in sliding fit with the inner wall of the sliding hole section, and the plug head section is plugged into the position-limiting hole section.

By employing the above-mentioned technical means, the valve plug can slide along the sliding hole section. When sliding toward the position-limiting hole section, the valve plug drives the plug head section to insert into the position-limiting hole section and block the fluid. When moving away from the position-limiting hole section, the valve plug drives the plug head section to disengage from the position-limiting hole section and release the fluid. Thus, by pushing the valve plug to slide, the opening and closing of the flow passage can be controlled.

In one embodiment, the flow passage further includes a flared section connecting the position-limiting hole section and the sliding hole section, where a cross-sectional area of the flared section gradually increases in a direction from the position-limiting hole section toward the sliding hole section.

By employing the above-mentioned technical means, the plug head section can be guided to be inserted into the position-limiting hole section.

In one embodiment, the valve plug further includes a guide section connecting the sliding section and the plug head section, the guide section being adapted to the flared section.

By employing the above-mentioned technical means, during insertion of the guide section into the flared section, the stability of the valve plug in the flow passage can be improved, and the valve plug can be prevented from shaking.

In one embodiment, the guide section is provided with a first vent configured to be in communication with the flared section, and the sliding section is provided with a second vent configured to communicate the first vent and the sliding hole section. The second vent penetrates through one end of the sliding section facing away from the flared section.

By employing the above-mentioned technical means, when the valve plug leaves the position-limiting hole section, the first vent and the second vent can communicate the position-limiting hole section and the sliding hole section, so that the flow passage is unobstructed.

In one embodiment, the connector further includes an elastic member and a position-limiting member. The position-limiting member is mounted at one end of the sliding hole section away from the position-limiting hole section. One end of the elastic member abuts against the valve plug, and the other end of the elastic member abuts against the position-limiting member.

By employing the above-mentioned technical means, the elastic member and the valve plug can be restricted from sliding out of the end of the sliding hole section away from the position-limiting hole section, and the elastic member can push the valve plug to move toward the position-limiting hole section to achieve automatic closing of the flow passage.

In one embodiment, the elastic member is a spring; and/or, the position-limiting member is a retaining ring.

By employing the above-mentioned technical means, the spring can push the valve plug to slide, so that the plug head section can be inserted into the position-limiting hole section; the retaining ring can stop the spring and prevent the spring from sliding out from the end of the sliding hole away from the position-limiting hole.

In one embodiment, a first sealing ring sleeves the plug head section.

By adopting the above-mentioned technical means, a sealing effect between the plug head section and an inner wall of the position-limiting hole section can be enhanced when the plug head section is inserted into the position-limiting hole section.

In one embodiment, a first annular groove is formed on an outer peripheral wall of the plug head section, the first annular groove is arranged around a central axis of the valve plug, and the first sealing ring is fitted inside the first annular groove.

By employing the above-mentioned technical means, the first sealing ring can be prevented from sliding on the plug head section.

In one embodiment, the connector includes an air guide column arranged on the plug-in side, and the air guide column is provided with a vent hole in communication with the flow passage.

By employing the above-mentioned technical means, when being inserted into an external flow passage, the air guide column can communicate with the external flow passage so that the fluid can flow between the external flow passage and the air guide column.

In one embodiment, one end of the air guide column away from the base is provided with a notch groove in communication with the vent hole, and the notch groove penetrates an outer peripheral wall of the air guide column.

By employing the above-mentioned technical means, the fluid can flow through a side of the air guide column, thereby avoiding obstruction of the fluid when an end portion of the air guide column abuts against a plane.

In one embodiment, the air guide column includes a plug-in section connected to the base and an abutment post located at one end of the plug-in section away from the base, a cross-sectional area of the abutment post being smaller than that of the plug-in section.

By employing the above-mentioned technical means, the air guide column can be easily inserted into the external flow passage.

In one embodiment, a second sealing ring sleeves the plug-in section.

By employing the above-mentioned technical means, a gap between the plug-in section and the inner wall of the external flow passage can be sealed to prevent air leakage.

In one embodiment, a second annular groove is formed on an outer peripheral wall of the plug-in section, the second annular groove is arranged around a central axis of the air guide column, and the second sealing ring is fitted inside the second annular groove.

By employing the above-mentioned technical means, stability of the second sealing ring can be improved, thereby preventing the second sealing ring from sliding along the plug-in section.

In one embodiment, a control valve is mounted at the end of the flow passage near the fixed side.

By employing the above-mentioned technical means, the opening and closing of the flow passage can be controlled by the control valve.

In one embodiment, the first terminal is detachably connected to the base.

By adopting the above-mentioned technical means, modular processing and assembling of the connector can be facilitated, which helps save production and maintenance costs.

In one embodiment, the connector further includes a second terminal configured to be electrically connected to a signal line, the second terminal being mounted on the base.

By employing the above-mentioned technical means, connection and conduction with the signal line can be achieved, thereby enabling signal transmission.

In one embodiment, the second terminal is detachably connected to the base.

By adopting the above-mentioned technical means, modular processing and assembling of the connector can be facilitated, which helps save production and maintenance costs.

In one embodiment, the connector further includes a third terminal configured to be electrically connected to the ground, the third terminal being mounted on the base.

Connecting the third terminal to the ground can improve the safety of the connector.

In one embodiment, the third terminal is detachably connected to the base.

By adopting the above-mentioned technical means, modular processing and assembling of the connector can be facilitated, which helps save production and maintenance costs.

In a second aspect, the embodiments of the present application further provide a battery, including a box body and a plurality of battery cells mounted in the box body, and further including the connector described in any of the above embodiments, where the base is connected to the box body, and the first terminal is electrically connected to the battery cells.

By employing the above-mentioned technical means, plug-in connection with the external plug-in module can be realized, so as to achieve connections of both the circuit and the pipeline simultaneously.

In a third aspect, the embodiments of the present application further provide an electrical apparatus, including the battery described in any of the above embodiments.

By adopting the above-mentioned technical means, the safety performance of the battery can be improved, thereby ensuring the safety and normal operation of the electrical apparatus.

### BRIEF DESCRIPTION OF THE DRAWINGS

To describe the technical solutions in the embodiments of the present application more clearly, the following will briefly describe the accompanying drawings required for describing the embodiments or the prior art. Apparently, the accompanying drawings in the following description show merely some embodiments of the present application, and for a person of ordinary skill in the art, other drawings may be derived according to these accompanying drawings without creative efforts.
FIG. 1 is a schematic structural view of a vehicle according to some embodiments of the present application;
FIG. 2 is a schematic view of an exploded structure of a battery according to some embodiments of the present application;
FIG. 3 is a three-dimensional schematic structural view of a connector according to an embodiment of the present application;
FIG. 4 is a cross-sectional view of FIG. 3;
FIG. 5 is a three-dimensional schematic structural view of a valve plug in FIG. 3;
FIG. 6 is three-dimensional schematic structural view of a connector according to another embodiment of the present application;
FIG. 7 is an enlarged view of a part A in FIG. 6; and
FIG. 8 is a cross-sectional view of the connector in FIG. 6.

### Reference Numerals in the Drawings:

1000. Vehicle; 100. Battery; 200. Controller; 300. Motor;
10. Connector; 11. Base; 101. Plug-in side; 102. fixed side; 110. Flow passage; 1101. Sliding hole section; 1102. Flared section; 1103. Position-limiting hole section; 12. Valve plug; 121. Sliding section; 1210. Second vent; 122. Guide section; 1220. First vent; 123. Plug head section; 1230. First annular groove; 13. Elastic member; 14. Position-limiting member; 15. First sealing ring; 16. First terminal; 17. Second terminal; 18. Third terminal;
20. Connector; 201. Plug-in side; 202. fixed side; 21. Base; 210. Flow passage; 22. Air guide column; 2201. Vent hole; 2202. Second annular groove; 221. Abutment post; 2210. Notch groove; 222. Plug-in section; 23. Second sealing ring; 24. Control valve; 25. First terminal; 26. Second terminal; 27. Third terminal;
30. Battery cell;
40. Box body; 41. First part; 42. Second part.

### DETAILED DESCRIPTION

The embodiments of the technical solution of the present application will be described in detail below with reference to the accompanying drawings. The following embodiments are only used to illustrate the technical solutions of the present application more clearly, and thus are only interpreted as examples, rather than used to limit the scope of protection of the present application.

Unless otherwise defined, all technical and scientific terms used herein have the same meanings as those commonly understood by those skilled in the art of the present application. The terms used herein are intended only for the purpose of describing specific embodiments and are not intended to limit the present application. The terms "including" and "having" and any variations thereof in the specification and claims of the present application and in the description of the above accompanying drawings are intended to cover non-exclusive inclusion.

In the description of the embodiments of the present application, the technical terms "first", "second", and the like are only used for distinguishing different objects, and cannot be understood as indicating or implying relative importance or implying the number, specific order, or primary and secondary relationship of the technical features indicated. In the description of the embodiments of the present application, the meaning of "a plurality of" is two or more, unless otherwise explicitly and specifically defined.

The "embodiment" mentioned herein means that specific features, structures, or characteristics described with reference to the embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise expressly specified and limited, the technical terms "mount," "connect," "connection," "fix", and the like should be understood in a broad sense, such as, a fixed connection, a detachable connection, or an integral connection; a mechanical connection, or an electrical connection; a direct connection, an indirect connection through an intermediate medium, an internal communication of two elements, or interaction between two elements. For those of ordinary skill in the art, the specific meaning of the above terms in embodiments the present application may be understood on a case-by-case basis.

At present, from the development of the market situation, the application of batteries is becoming increasingly more extensive. Batteries are used not only in energy storage power source systems in hydraulic, thermal, wind, and solar power stations, but also in electric means of transportation such as electric bicycles, electric motorcycles, and electric vehicles, as well as in many fields such as military equipment and aerospace. With continuous expansion of the application field of batteries, a demand therefor in the market is also constantly increasing.

In related arts, a battery includes a box body and a plurality of battery cells. In charging and discharging processes, the battery cells generate a large amount of heat, which increases the pressure and temperature inside the box body, potentially causing the box body to explode or catch fire. To prevent an excessive pressure inside the box body, vent holes are arranged on the box body to release the pressure in the box body. To reduce the battery temperature, heat exchange plates are usually used to cool the battery cells. However, in a process of cooling the battery cells using the heat exchange plates, a relatively low temperature of the heat exchange plates may easily cause moisture inside the box body to condense and form water vapor. The water vapor may corrode circuits and may even cause short circuits, thereby affecting lifespan and safety of the battery.

To address this, a pipeline connector may be mounted on the box body to blow out moisture by supplying dry gas into the box body via an air source, thus drying the interior of the box body. A fire extinguishing agent can also be supplied into the box body via the pipeline connector to extinguish fire. Mounting the pipeline connector on the box body increases the complexity of the box body structure and adds an assembling step. Each time the battery is charged and discharged, the pipeline connector and a power connector need to be connected, which is not only cumbersome but also easy to miss or disconnect an external pipeline, which is very inconvenient.

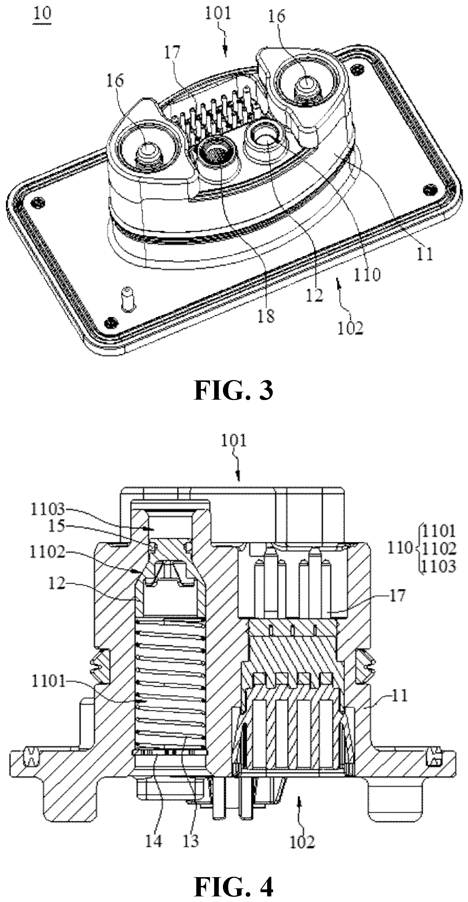

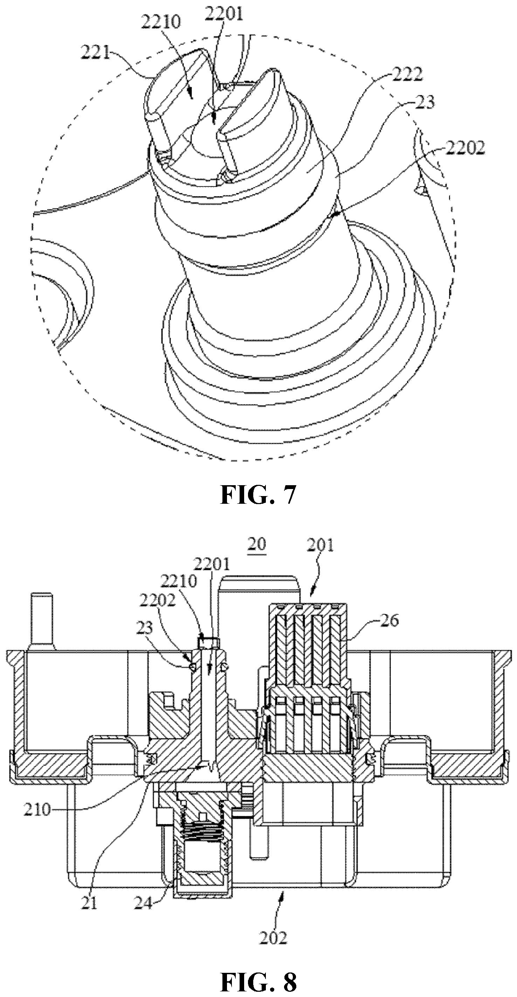

Based on the above considerations, some embodiments of the present application provide a connector. Referring to FIG. 3, FIG. 4 and FIG. 8, a connector 10 includes a base 11 and a first terminal 16. The base 11 has a plug-in side 101 and a fixed side 102. A flow passage 110 is provided in the base 11, and the flow passage 110 is configured to convey a fluid. Openings of the flow passage 110 are located on the plug-in side 101 and the fixed side 102, respectively. The first terminal 16 is configured to be electrically connected to a power source. When the connector 10 is plugged into an external plug-in module, the first terminal 16 can connect to a power circuit and simultaneously connect the pipeline, so as to deliver dry gas into the box body 40 of the battery during charging and discharging, thereby ensuring the dryness inside the box body 40. This reduces the number of plugging, simplifies the operation, and prevents forgetting to unplug a gas tube when plugging and unplugging the power source, making the operation more convenient.

The collector disclosed in the embodiment of the present application may be an electrical apparatus for using a battery or a battery pack, and the collector may be configured for charge and discharge connection of the battery or battery pack. The electrical apparatus may be, but not limited to, a vehicle, a portable device, a laptop, a ship, a spacecraft, an electric toy, a power tool, and the like. The vehicle may be a fuel vehicle, a gas vehicle, or a new energy vehicle, and the new energy vehicle may be a battery electric vehicle, a hybrid electric vehicle, an extended range vehicle, and the like. The spacecraft includes an airplane, a rocket, a space shuttle, a spaceship, and the like. The electric toy may include fixed or mobile electric toys, such as a game machine, an electric vehicle toy, an electric ship toy, an electric airplane toy, and the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer.

For the convenience of description in the following embodiments, an electrical apparatus according to an embodiment of the present application being a vehicle 1000 is taken as an example for description.

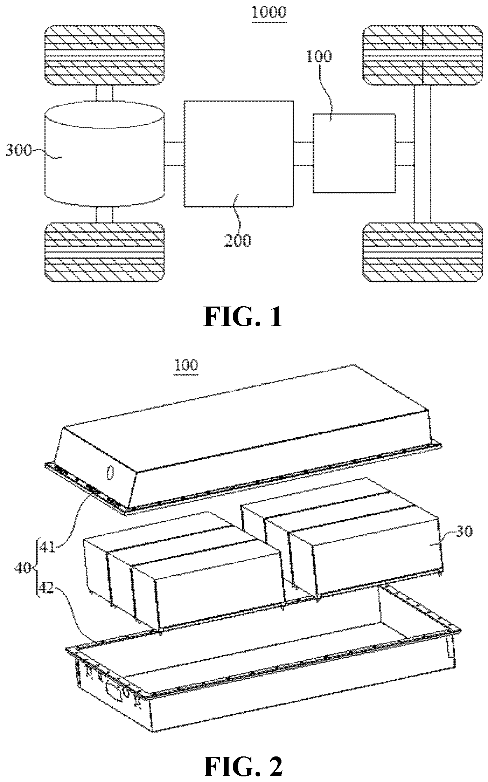

Referring to FIG. 1, FIG. 1 is a schematic structural view of a vehicle 1000 according to some embodiments of the present application. The interior of the vehicle 1000 is provided with a battery 100, and the battery 100 may be provided at the bottom or head or tail of the vehicle 1000. The battery 100 may be configured to supply power to the vehicle 1000. For example, the battery 100 may be used as an operating power source of the vehicle 1000. The vehicle 1000 may further include a controller 200 and a motor 300. The controller 200 is configured to control the battery 100 to supply power to the motor 300, for example, to meet a demand for working power during starting, navigation, and driving of the vehicle 1000.

In some embodiments of the present application, the battery 100 not only may serve as the operating power source of the vehicle 1000, but also may serve as a driving power source of the vehicle 1000, thus replacing or partially replacing fuel or natural gas to provide driving power for the vehicle 1000.

Referring to FIG. 2, FIG. 2 is a schematic exploded view of a battery 100 according to an embodiment of the present application. The battery 100 includes a connector 10, a box body 40, and a battery cell 30, where the battery cell 30 is accommodated within the box body 40. The connector 10 is a mechanism for cooling, insulating, or heating the battery cell 30. The connector 10 may be placed entirely within an accommodating space of the box body 40, or may be placed partially within the accommodating space of the box body 40.

The box body 40 is configured to provide the accommodating space for the battery cell 30, and the box body 40 may be of a variety of structures. In some embodiments, the box body 40 may include a first part 41 and a second part 42, the first part 41 and the second part 42 covering each other, and the first part 41 and the second part 42 together defining the accommodating space for accommodating the battery cell 30. The second part 42 may be of a hollow structure with an opening in one end, and the first part 41 may be of a plate-shaped structure, where the first part 41 covers the opening side of the second part 42 such that the first part 41 and the second part 42 together define the accommodating space. The first part 41 and the second part 42 may each be of a hollow structure with an opening in one side, where the opening side of the first part 41 covers the opening side of the second part 42. Of course, the box body 40 formed by the first part 41 and the second part 42 may be of a variety of shapes, such as a cylinder and a rectangular solid.

In some embodiments, the box body 40 may be a part of a chassis structure of the vehicle 1000. For example, a part of the box body 40 may become at least a part of a floor of the vehicle 1000, or a part of the box body 40 may become at least a part of a cross beam and a longitudinal beam of the vehicle 1000.

Of course, in some embodiments, the battery 100 may not include the box body 40, but a plurality of battery cells 30 may be electrically connected and formed into an entirety through a necessary fixing structure and are then assembled into the vehicle 1000.

In the battery 100, there may be a plurality of battery cells 30, the plurality of battery cells 30 may be connected in series or in parallel or in series-parallel, and the series-parallel connection refers to that the plurality of battery cells 30 are connected both in series and in parallel. The plurality of battery cells 30 may be directly connected in series, parallel, or in series-parallel together, and the entirety constructed by the plurality of battery cells 30 is accommodated in the box body 40. Certainly, for the battery 100, a battery module may be composed of a plurality of battery cells 30 connected in series or parallel or parallel-series, and then a plurality of battery modules are connected in series or parallel or parallel-series to form an entirety which is accommodated in the box body 40. The battery 100 may further include other functional components. For example, the battery 100 may further include a busbar for electrically connecting the plurality of battery cells 30.

Specifically, each of the battery cells 30 may be a secondary battery or a primary battery, where the secondary battery refers to a battery cell 30 that may continue to be used by activating an active material through charging after the battery cell 30 is discharged, and the primary battery refers to a battery cell 30 that cannot continue to be used by activating the active material through charging after the battery cell 30 is discharged. The battery cell 30 may also be, but is not limited to, a lithium-ion battery cell, a sodium-ion battery cell, a sodium-lithium-ion battery cell, a lithium-metal battery cell, a sodium-metal battery cell, a lithium-sulfur battery cell, a magnesium-ion battery cell, a nickel-metal hydride battery cell, a nickel-cadmium battery cell, or a lead storage battery cell. The battery cell 30 may be a cylindrical battery cell, a prismatic battery cell, a pouch battery cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

For ease of explanation, the following embodiments are described with reference to the connector 10 according to an embodiment of the present application.

Referring to FIG. 3 to FIG. 5, the present application provides a connector 10. The connector 10 includes a base 11 and a first terminal 16. The base 11 has a plug-in side 101 and a fixed side 102 arranged opposite to the plug-in side 101. The first terminal 16 is configured to be electrically connected to a power source, the first terminal 16 is connected to the base 11, and the first terminal 16 is located on the plug-in side 101. A flow passage 110 is further provided in the base 11 for conveying a fluid. Two ports of the flow passage 110 are located on the plug-in side 101 and the fixed side 102, respectively.

It should be noted that the connector 10 may be mounted on the box body 40 of the battery 100 as a plug-in module of the battery 100, or it may be plugged into and cooperate with the plug-in module on the box body 40 of the battery 100. When the connector 10 is mounted on the box body 40, the flow passage 110 may be in communication with the interior of the box body 40 directly or in communication through a pipe so that dry gas can be introduced when it is necessary to dry the interior of the box body 40, and a fire extinguishing agent can be introduced when it is necessary to extinguish fire inside the box body 40. When the connector 10 is the structure that is plugged into and cooperate with the plug-in module on the battery 100, one end of the flow passage 110 near the fixed side 102 may be connected to a gas source, and the like, to deliver the dry gas into the box body 40 of the battery, or connected to a fire extinguishing agent source, to deliver the fire extinguishing agent into the box body 40.

The base 11 is provided with the plug-in side 101 and the fixed side 102. The plug-in side 101 refers to a side of the base 11 facing the external plug-in module when the connector 10 is plugged into the external plug-in module. The fixed side 102 is the other side opposite to the plug-in side 101. It is not limited that the fixed side 102 is connected to the box body 40 when the connector 10 is mounted on the box body 40. The base 11 may be embedded in the box body 40 or integrated with a part of the structure of the box body 40. The plug-in side 101 of the base 11 may be connected to the box body 40, or the fixed side 102 of the base 11 may be connected to the box body 40.

The first terminal 16 may be a power terminal, and the first terminal 16 may be a conductor in the shape of a column or a cylinder. The number of the first terminals 16 may be, but is not limited to, two.

The flow passage 110 may be configured to deliver a fluid such as gas, liquid, powder, or particles. When conveying a dry gas or the like, the moisture inside the box body 40 is removed by promoting the outflow of air from the box body 40, thereby achieving a drying effect inside the box body 40. When conveying a flame-retardant media (such as carbon dioxide or a dry powder extinguishing agent), it achieves a fire extinguishing effect.

The base 11 of the connector 10 provided in the embodiment of the present application may be plugged into the external plug-in module, so that the battery 100 can be connected to an external circuit through the first terminal 16. At the same time, the interior of the box body 40 is in communication with an external fluid supply apparatus through the flow passage 110 to facilitate the delivery of the fluid into the box body 40. For example, the fluid is a dry gas, and the dry gas enters the interior of the box body 40 and blows out the moisture inside the box body 40, thereby drying the interior of the box body 40. Alternatively, the fluid is a fire extinguishing agent, and the fire extinguishing agent enters the interior of the box body 40 to extinguish a fire inside the box body 40, thus helping improve the safety performance of the battery 100. This helps reduce the number of connectors 10 on the box body 40, which simplifies the structure of the box body 40. After the connector 10 is plugged into the external plug-in modules, the connections of both the circuit and the pipeline may be realized at the same time, which simplifies the battery connection process and improves the battery mounting efficiency.

In one embodiment, referring to FIG. 3 to FIG. 5, the connector 10 further includes a valve plug 12 for controlling opening and closing of the flow passage 110, the valve plug 12 being mounted within the flow passage 110.

The valve plug 12 may be, but is not limited to, a spherical, plate-shaped, or conical structure. When the valve plug 12 has a spherical or conical structure, the valve plug 12 may be confined in the flow passage 110. When the valve plug 12 moves to one end of the flow passage 110 near the plug-in side 101, the valve plug 12 blocks the flow passage 110 and prevents the flow of the fluid or the like. When the valve plug 12 moves toward the other end of the flow passage 110, the flow passage 110 is opened to allow the fluid or the like to flow. When the valve plug 12 is plate-shaped, the valve plug 12 may be a one-way valve plate. The valve plug 12 may be hinged to the inner wall of the flow passage 110, or it may be a one-way valve plate with one end fixed in the base 11 by injection molding.

By mounting the valve plug 12 inside the flow passage 110, opening and closing of the pipeline of the connector 10 may be controlled as the valve plug 12 moves, so that the pipeline may be disconnected when air supply is not required.

In one embodiment, referring to FIG. 3 to FIG. 5, the flow passage 110 includes a sliding hole section 1101 and a position-limiting hole section 1103, the sliding hole section 1101 and the position-limiting hole section 1103 being in communication with each other. The position-limiting hole section 1103 is located at an end of the sliding hole section 1101 away from the fixed side 102. A cross-sectional area of the position-limiting hole section 1103 is smaller than that of the sliding hole section 1101. One end of the valve plug 12 is plugged into and cooperates with the position-limiting hole section 1103 to block the position-limiting hole section 1103, and the other end of the valve plug 12 is in sliding fit with an inner wall of the sliding hole section 1101.

It is understandable that, when the valve plug 12 moves toward the position-limiting hole section 1103, the end of the valve plug 12 away from the position-limiting hole section 1103 is in sliding fit with the inner wall of the sliding hole section 1101 to keep the valve plug 12 sliding along the flow passage 110. When the end of the valve plug 12 close to the position-limiting hole section 1103 is inserted into the position-limiting hole section 1103, the end portion of the valve plug 12 blocks the position-limiting hole section 1103, thus blocking the flow passage 110. The valve plug 12 may slide toward the position-limiting hole section 1103 under the action of air pressure, elastic force, magnetic force, gravity, or the like, so as to realize the automatic blocking of the flow passage 110.

The cross-sectional area of the end of the valve plug 12 that is plugged into and cooperates with the position-limiting hole section 1103 is smaller than the cross-sectional area of the other end of the valve plug 12. The cross-sectional area of the end of the valve plug 12 that is away from the position-limiting hole section 1103 may be greater than the cross-sectional area of the position-limiting hole section 1103.

By controlling the cross-sectional area of the position-limiting hole section 1103 to be smaller than the cross-sectional area of the sliding hole section 1101, the valve plug 12 can be prevented from sliding out of the position-limiting hole section 1103, and the valve plug 12 may be allowed to slide within the flow passage 110. This allows the fluid to be cut off when the valve plug 12 slides to the position-limiting hole section 1103, thus closing the flow passage 110. When the valve plug 12 slides away from the position-limiting hole section 1103, the position-limiting hole section 1103 can be opened, thereby enabling communication of the flow passage 110.

In one embodiment, referring to FIG. 3 to FIG. 5, the valve plug 12 includes a sliding section 121 and a plug head section 123, where the sliding section 121 is in sliding fit with the inner wall of the sliding hole section 1101, and the plug head section 123 is plugged into and cooperates with the position-limiting hole section 1103.

A cross-sectional area of the plug head section 123 is smaller than that of the sliding section 121, which can restrict the sliding section 121 from sliding out of the position-limiting hole section 1103.

The position-limiting hole section 1103 may be a round hole, a square hole, or the like. When the position-limiting hole section 1103 is a round hole, the plug head section 123 may be a columnar, spherical, or conical structure. When the position-limiting hole section 1103 is a rectangular hole, the plug head section 123 may be a prism, a multi-faceted pyramid, or another structure.

The sliding hole section 1101 may be a round hole, a square hole, or the like. When the sliding hole section 1101 is a round hole, the sliding section 121 may be a cylindrical structure or a prismatic structure. When the sliding hole section 1101 is a square hole, the sliding section 121 may be a cylindrical structure, a prismatic structure, or the like.

The valve plug 12 slides along the sliding hole section 1101, and therefore, when sliding toward the position-limiting hole section 1103, the valve plug 12 drives the plug head section 123 to insert into the position-limiting hole section 1103 and block the fluid. When moving away from the position-limiting hole section 1103, the valve plug 12 drives the plug head section 123 to disengage from the position-limiting hole section 1103 and release the fluid. Thus, by pushing the valve plug 12 to slide, the opening and closing of the flow passage 110 can be controlled.

In one embodiment, referring to FIG. 3 to FIG. 5, the flow passage 110 further includes a flared section 1102 connecting the position-limiting hole section 1103 and the sliding hole section 1101, where a cross-sectional area of the flared section 1102 gradually increases in a direction from the position-limiting hole section 1103 toward the sliding hole section 1101.

The flared section 1102 may be, but is not limited to, conical. When the valve plug 12 slides toward the position-limiting hole section 1103, after the plug head section 123 enters the flared section 1102, the flared section 1102 can guide the plug head section 123 to align with the position-limiting hole section 1103 so that the plug head section 123 may be inserted into the position-limiting hole section 1103.

By employing the flared section 1102, the plug head section 123 can be guided to be inserted into the position-limiting hole section 1103, to facilitate blocking the flow passage 110.

In one embodiment, referring to FIG. 3 to FIG. 5, the valve plug 12 further includes a guide section 122 connecting the sliding section 121 and the plug head section 123, the guide section 122 being adapted to the flared section 1102.

The guide section 122 is adapted to the flared section 1102. A cross-sectional area of the guide section 122 gradually increases in a direction from one end of the plug head section 123 toward the sliding section 121. When the plug head section 123 is inserted into the position-limiting hole section 1103, an outer peripheral wall of the guide section 122 can fit against the inner wall of the flared section 1102. Of course, considering assembly errors, there may be a small gap between the outer peripheral wall of the guide section 122 and the inner wall of the flared section 1102.

When the guide section 122 is inserted into the flared section 1102, the outer peripheral wall of the guide section 122 abuts against the inner wall of the flared section 1102, which can improve the stability of the valve plug 12 in the flow passage 110, prevent the valve plug 12 from shaking, and limit the valve plug 12 from moving further towards the position-limiting hole section 1103.

In one embodiment, referring to FIG. 3 to FIG. 5, the guide section 122 is provided with a first vent 1220 configured to be in communication with the flared section 1102, and the sliding section 121 is provided with a second vent 1210 configured to be in communication with the first vent 1220 and the sliding hole section 1101. The second vent 1210 penetrates through one end of the sliding section 121 facing away from the flared section 122.

One end of the first vent 1220 that is away from the second vent 1210 may be located on the outer peripheral wall of the guide section 122. When abutting against the inner wall of the flared section 1102, the guide section 122 can block the opening of the first vent 1220. There may be one or more, such as two, three, or four first vents 1220. A plurality of first vents 1220 may be arranged around an axis of the guide section 122. There may be one or more second vents 1210. A plurality of first vents 1220 may be in communication with one second vent 1210, or one first vent 1220 may be in communication with a plurality of second vents 1210, or the first vents 1220 may one-to-one correspond to the second vents 1210.

When the valve plug 12 leaves the position-limiting hole section 1103, a portion of the fluid may enter the sliding hole section 1101 from the position-limiting hole section 1103 through the flared section 1102, and another portion of the fluid may enter the sliding hole section 1101 from the flared section 1102 through the first vent 1220 and the second vent 1210, thus making the flow passage 110 unobstructed.

In one embodiment, referring to FIG. 3 to FIG. 5, the connector 10 further includes an elastic member 13 and a position-limiting member 14. The elastic member 13 is configured to push the plug head section 123 to be inserted into the position-limiting hole section 1103. The position-limiting member 14 is mounted at one end of the sliding hole section 1101 away from the position-limiting hole section 1103. One end of the elastic member 13 abuts against the valve plug 12, and the other end of the elastic member 13 abuts against the position-limiting member 14.

The position-limiting member 14 may be detachably mounted in the sliding hole section 1101, such as by interference fit or snap-fit, or it may be fixed in the sliding hole section 1101 by injection molding or adhering.

By employing the position-limiting member 14, the elastic member 13 and the valve plug 12 can be restricted from sliding out of the end of the sliding hole section 1101 away from the position-limiting hole section 1103, and the elastic member 13 can push the valve plug 12 to move toward the position-limiting hole section 1103 to achieve automatic closing of the flow passage 110.

In one embodiment, referring to FIG. 3 to FIG. 5, the elastic member 13 is a spring; and/or, the position-limiting member 14 is a retaining ring.

The spring can push the valve plug 12 to move toward the position-limiting hole section 1103, thereby inserting the plug head section 123 into the position-limiting hole section 1103. The spring is in a compressed state in the sliding hole section 1101. When the valve plug 12 is pushed by the position-limiting hole section 1103 to be away from the position-limiting hole section 1103, the valve plug 12 compresses the spring, and leaves the position-limiting hole section 1103, thereby achieving communication of the flow passage 110.

Optionally, a positioning ring groove may be formed in the sliding hole section 1101. The positioning ring groove is arranged around the axis of the sliding hole section 1101, and the positioning ring groove is configured for the retaining ring to be engaged so as to position the retaining ring.

By employing the spring abutting against the retaining ring and the valve plug 12, the valve plug 12 can be pushed to slide, so that the plug head section 123 can be automatically inserted into the position-limiting hole section 1103. The retaining ring can stop the spring and prevent the spring from sliding out from the end of the sliding hole section 1101 away from the position-limiting hole section 1103, and facilitate maintenance of the valve plug 12, the spring, and the retaining ring.

In one embodiment, referring to FIG. 3 to FIG. 5, a first sealing ring 15 sleeves the plug head section 123.

The first sealing ring 15 may be a rubber ring, a silicone ring, or the like. There may be, but is not limited to, one first sealing ring 15.

By adopting the first sealing ring 15, a sealing effect between the plug head section 123 and the inner wall of the position-limiting hole section 1103 can be enhanced when the plug head section 123 is inserted into the position-limiting hole section 1103.

In one embodiment, a first annular groove 1230 is formed on an outer peripheral wall of the plug head section 123, the first annular groove 1230 is arranged around a central axis of the valve plug 12, and the first sealing ring 15 is fitted inside the first annular groove 1230.

A depth of the first annular groove 1230 may be smaller than a difference in radius between inner and outer rings of the first sealing ring 15. In this way, when the first sealing ring 15 is placed in the first annular groove 1230, it may protrude outward so that the protruding part may abut against the inner wall of the position-limiting hole section 1103 to achieve sealing.

By employing the first annular groove 1230, the first sealing ring 15 may be prevented from sliding on the plug head section 123, so as to maintain stability of the position of the first sealing ring 15 during the insertion or extraction of the plug head section 123 into or out of the position-limiting hole section 1103.

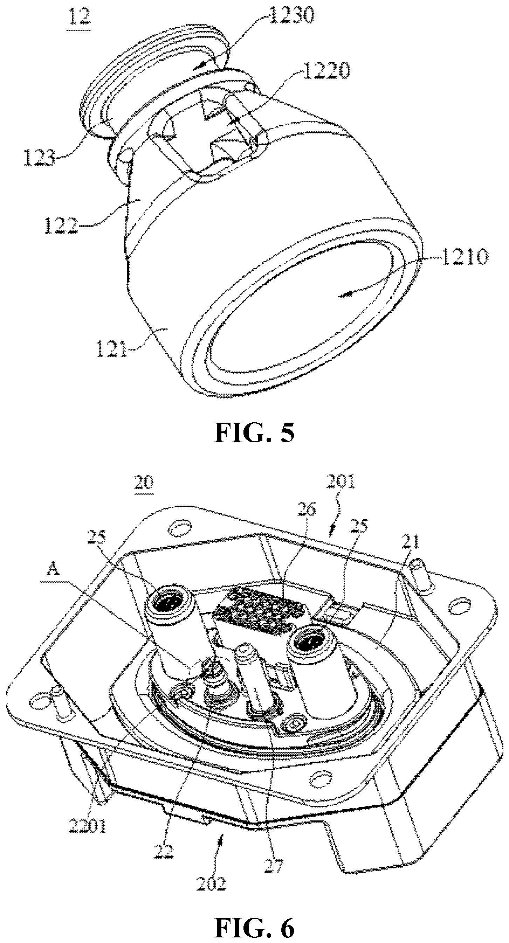

In some other embodiments, referring to FIG. 6, FIG. 7, and FIG. 8, a connector 20 includes an air guide column 22 arranged on a plug-in side 201, and the air guide column 22 is provided with a vent hole 2201 in communication with a flow passage 210.

The connector 20 includes a base 21 and a first terminal 25. The first terminal 25 is mounted on the base 21. The base 21 has the plug-in side 201 and a fixed side 202. The plug-in side 201 and the fixed side 202 refer to opposite sides of the base 21. The flow passage 210 is provided in the base 21, and two ends of the flow passage 210 are located at the two ends of the base 21.

The air guide column 22 may be a metal column or a plastic column integrated with the base 21. When the connector 20 is inserted into an external plug-in module (which may be the connector 10 shown in FIG. 3 to FIG. 5), the air guide column 22 is inserted into the flow passage of the external plug-in module, so that a vent hole 2201 is in communication with the external flow passage.

By employing the air guide column 22, it can be inserted into and cooperate with the flow passage of the external plug-in module, and when being inserted into the external flow passage, the air guide column 22 can communicate with the external flow passage to facilitate delivering the fluid.

In one embodiment, referring to FIG. 6 to FIG. 8, one end of the air guide column 22 away from the base 21 is provided with a notch groove 2210 in communication with the vent hole 2201, and the notch groove 2210 penetrates an outer peripheral wall of the air guide column 22.

A depth direction of the notch groove 2210 may be along an axial direction or a radial direction of the air guide column 22, and the notch groove 2210 may penetrate the outer peripheral surface of the end portion of the air guide column 22.

This facilitates the fluid flow from the side of the air guide column 22, thereby preventing the fluid flow blockage when the end portion of the air guide column 22 abuts against the plane (the end surface of the plug head section 123 as shown in FIG. 4 and FIG. 5).

In one embodiment, referring to FIG. 6 to FIG. 8, the air guide column 22 includes a plug-in section 222 and an abutment post 221. The abutment post 221 is arranged at one end of the plug-in section 222 away from the base 21, and a cross-sectional area of the abutment post 221 is smaller than that of the plug-in section 222.

The notch groove 2210 may be formed on the abutment post 221, or the notch groove 2210 may be formed by cutting the abutment post 221 into a plurality of parts along its axial surface. One end of the plug-in section 222 near the abutment post 221 may be provided with a chamfered structure to facilitate the insertion of the plug-in section 222 into the external flow passage.

When the connector 20 is plugged into the external plug-in module, the abutment post 221 is first inserted into the external flow passage. When a valve plug is arranged in the external flow passage, the abutment post 221 pushes the valve plug to slide. Since the cross-sectional area of the abutment post 221 is small, it is easy to guide the air guide column 22 into the external flow passage. When the notch groove 2210 is in communication with the external flow passage, a gap between the notch groove 2210 and the inner wall of the external flow passage can be increased to facilitate the flow of the fluid.

In one embodiment, a second sealing ring 23 sleeves the plug-in section 222.

The second sealing ring 23 may be a rubber ring, a silicone ring, or the like. There may be one or a plurality of second sealing rings 23.

By employing the second sealing ring 23, when the plug-in section 222 is inserted into the external air passage, the second sealing ring 23 can seal the gap between the air guide column 22 and the inner wall of the external flow passage to prevent air leakage and keep the first terminal 25 isolated from the flow passage 210.

In one embodiment, referring to FIG. 6 to FIG. 8, a second annular groove 2202 is formed on an outer peripheral wall of the plug-in section 222, the second annular groove 2202 is arranged around a central axis of the air guide column 22, and the second sealing ring 23 is fitted inside the second annular groove 2202.

A depth of the second annular groove 2202 may be smaller than a difference in radius between inner and outer rings of the second sealing ring 23. In this way, when second sealing ring 23 is placed in the second annular groove 2202, it may protrude outward so that the protruding part may abut against the inner wall of the external flow passage (which may be the position-limiting hole section 1103 in FIG. 4) to achieve sealing.

When the connector 20 is plugged into the external plug-in module, the plug-in section 222 may be partially or completely inserted into the external flow passage, and the second annular groove 2202 is located at a part where the plug-in section 222 is inserted into the external flow passage.

By employing the second annular groove 2202, the second sealing ring 23 may be prevented from sliding on the plug-in section 222, so as to maintain stability of the position of the second sealing ring 23 during the insertion or extraction of the air guide column 22 into or out of the external flow passage.

In one embodiment, referring to FIG. 6 to FIG. 8, a control valve 24 is mounted at the end of the flow passage 210 near the fixed side 202.

The control valve 24 may be a solenoid valve or a check valve. The solenoid valve may shut off the flow passage 210 when needed to prevent fluid flow, while the check valve can allow the fluid to flow in one direction and prevent the fluid from flowing backward.

By employing the control valve 24, opening and closing of the flow passage 210 can be controlled to prevent air leakage of the flow passage 210 or foreign objects from entering the flow passage 210 after the external plug-in module is pulled out.

In one embodiment, referring to FIG. 6 to FIG. 8, the first terminal 25 is detachably connected to the base 21.

The first terminal 25 and the base 21 may be connected by snap-fit or screws and assembled together.

In this way, modular processing and assembling of the connector 20 can be facilitated, which helps save production and maintenance costs.

In some embodiments, referring to FIG. 3 to FIG. 5, the connector 10 further includes a second terminal 17 configured to be electrically connected to a signal line, the second terminal 17 being mounted on the base 11.

Referring to FIG. 6 to FIG. 8, the first terminal 25 and the second terminal 26 of the connector 20 are interchangeable with the first terminal 16 and the second terminal 17 of the connector 10. The connector 10 and the connector 20 may be in plug-in engagement, thereby achieving simultaneous connections of both the circuit and the pipeline during mating.

By employing the second terminal 17, conduction with the signal line can be achieved, thereby enabling signal transmission.

In one embodiment, referring to FIG. 3 to FIG. 5, the second terminal 17 is detachably connected to the base 11.

The second terminal 17 and the base 11 may be connected by snap-fit or screws and assembled together.

In this way, modular processing and assembling of the connector 10 can be facilitated, which helps save production and maintenance costs.

In some embodiments, referring to FIG. 3 to FIG. 5, the connector 10 further includes a third terminal 18 configured to be connected to the ground, the third terminal 18 being mounted on the base 11. In this embodiment, the connector 10 is a male connector, and the third terminal 18 may be of a cylindrical structure.

In some other embodiments, referring to FIG. 6, the connector 20 further includes a third terminal 27 configured to be connected to the ground, the third terminal 27 being mounted on the base 21. In this embodiment, the connector 20 is a female connector, and the third terminal 27 may be of a guide column structure.

The third terminal and the base are detachably connected by snap-fit or screws and assembled together. In this way, modular processing and assembling of the connector can be facilitated, which helps save production and maintenance costs.

Connecting the third terminal to the ground can improve the safety of the connector.

Referring to FIG. 2 to FIG. 5, the embodiments of the present application further provide a battery, including a box body 40 and a plurality of battery cells 30 mounted in the box body 40, and further including the connector 10 described in any of the above embodiments, where the base 11 is connected to the box body 40, and the first terminal 17 is electrically connected to the battery cells 30.

The flow passage 110 may either deliver a fluid to the box body 40 through an air pipe or be directly in communication with the interior of the box body 40.

The connector 10 can be plugged into the external plug-in module, to achieve the connections of both the circuit and the pipeline at the same time, which simplifies the battery connection and is conducive to improving the safety performance of the battery.

Referring to FIG. 2 and FIG. 6, the embodiments of the present application further provide a battery, including the connector described in any of the above embodiments.

Referring to FIG. 1 to FIG. 3, the embodiments of the present application further provide an electrical apparatus, including the battery described in any of the above embodiments.

By adopting the above-mentioned technical means, the safety performance of the battery 100 can be improved, thereby ensuring the safety and normal operation of the electrical apparatus.

Referring to FIG. 3 to FIG. 8, the embodiments of the present application provide a connector 10 and a plug-in module. The connector 10 is mounted on the box body 40 of the battery 100. The connector 10 is plugged into the plug-in module. The plug-in module may be the connector 20 shown in FIG. 6 to FIG. 8. When the plug-in module and connector 10 are mated, the air guide column 22 is inserted into the flow passage 110, and the abutment post 221 pushes the valve plug 12 to slide, achieving communication of the flow passage 110, and then a dry gas or a fire extinguishing medium may be delivered to the box body 40. Definitely, the plug-in module may be mounted on the box body 40 and plugged into the plug-in module via the connector 10 to achieve the connections of both the circuit and pipeline.

The foregoing description illustrates merely preferred embodiments of the present application, but is not intended to limit the present application. Any modification, equivalent substitution, or improvement made within the spirit and principle of the present application shall fall within the protection scope of the present application.

## Claims

1. A connector, comprising:
a base having a plug-in side and a fixed side arranged opposite to the plug-in side; and
a first terminal, the first terminal being connected to the base and the first terminal being located on the plug-in side and configured to be electrically connected to a power source,
wherein the base is further provided with a flow passage for conveying a fluid, with two ports of the flow passage located on the plug-in side and the fixed side, respectively.

2. The connector according to claim 1, wherein the connector further comprises a valve plug configured to control opening and closing of the flow passage, the valve plug being mounted within the flow passage.

3. The connector according to claim 2, wherein the flow passage comprises a sliding hole section and a position-limiting hole section that are in communication with each other, the position-limiting hole section is located at an end of the sliding hole section away from the fixed side, a cross-sectional area of the position-limiting hole section is smaller than that of the sliding hole section, one end of the valve plug is plugged into the position-limiting hole section to block the position-limiting hole section, and the other end of the valve plug is in sliding fit with an inner wall of the sliding hole section.

4. The connector according to claim 3, wherein the valve plug comprises a sliding section and a plug head section, the sliding section is in sliding fit with the inner wall of the sliding hole section, and the plug head section is plugged into the position-limiting hole section.

5. The connector according to claim 4, wherein the flow passage further comprises a flared section connecting the position-limiting hole section and the sliding hole section, and a cross-sectional area of the flared section gradually increases in a direction from the position-limiting hole section toward the sliding hole section.

6. The connector according to claim 5, wherein the valve plug further comprises a guide section connecting the sliding section and the plug head section, the guide section being adapted to the flared section.

7. The connector according to claim 6, wherein the guide section is provided with a first vent configured to be in communication with the flared section, the sliding section is provided with a second vent configured to communicate the first vent and the sliding hole section, and the second vent penetrates through one end of the sliding section facing away from the flared section.

8. The connector according to any one of claims 4 to 7, wherein a first sealing ring sleeves the plug head section.

9. The connector according to claim 8, wherein a first annular groove is formed on an outer peripheral wall of the plug head section, the first annular groove is arranged around a central axis of the valve plug, and the first sealing ring is fitted inside the first annular groove.

10. The connector according to any one of claims 3 to 9, wherein the connector further comprises an elastic member and a position-limiting member, the position-limiting member is mounted at one end of the sliding hole section away from the position-limiting hole section, one end of the elastic member abuts against the valve plug, and the other end of the elastic member abuts against the position-limiting member.

11. The connector according to claim 10, wherein the elastic member is a spring; and/or, the position-limiting member is a retaining ring.

12. The connector according to any one of claims 1 to 11, wherein the connector comprises an air guide column arranged on the plug-in side, and the air guide column is provided with a vent hole in communication with the flow passage.

13. The connector according to claim 12, wherein one end of the air guide column away from the base is provided with a notch groove in communication with the vent hole, and the notch groove penetrates an outer peripheral wall of the air guide column.

14. The connector according to claim 13, wherein the air guide column comprises a plug-in section connected to the base and an abutment post located at one end of the plug-in section away from the base, a cross-sectional area of the abutment post being smaller than that of the plug-in section.

15. The connector according to claim 14, wherein a second sealing ring sleeves the plug-in section.

16. The connector according to claim 15, wherein a second annular groove is formed on an outer peripheral wall of the plug-in section, the second annular groove is arranged around a central axis of the air guide column, and the second sealing ring is fitted inside the second annular groove.

17. The connector according to any one of claims 12 to 16, wherein a control valve is mounted at one end of the flow passage near the fixed side.

18. The connector according to any one of claims 1 to 17, wherein the first terminal is detachably connected to the base.

19. The connector according to any one of claims 1 to 18, wherein the connector further comprises a second terminal configured to be electrically connected to a signal line, the second terminal being mounted on the base.

20. The connector according to claim 19, wherein the second terminal is detachably connected to the base.

21. The connector according to any one of claims 1 to 20, wherein the connector further comprises a third terminal configured to be connected to the ground, the third terminal being mounted on the base.

22. The connector according to claim 21, wherein the third terminal is detachably connected to the base.

23. A battery, comprising a box body and a plurality of battery cells mounted in the box body, and further comprising the connector according to any one of claims 1 to 22, wherein the base is connected to the box body, and the first terminal is electrically connected to the battery cells.

24. An electrical apparatus, comprising the battery according to claim 23.
